Europäisches Patentamt

(19) European Patent Office

Office européen des brevets

(11) Numéro de publication : **0 320 318 B1**

(12) FASCICULE DE BREVET EUROPEEN

(45) Date de publication du fascicule du brevet :
20.03.91 Bulletin 91/12

(21) Numéro de dépôt : 88402576.8

(22) Date de dépôt : 12.10.88

(51) Int. Cl.⁵ : **B62B 3/00**

(54) **Chariot grillagé susceptible de résister aux chocs et destiné au transport de produits divers.**

(30) Priorité : 09.12.87 FR 8717132

(43) Date de publication de la demande :
14.06.89 Bulletin 89/24

(45) Mention de la délivrance du brevet :
20.03.91 Bulletin 91/12

(84) Etats contractants désignés :
**BE DE ES IT LU NL**

(56) Documents cités :
**WO-A-83/02881**
**FR-A- 2 189 304**

(73) Titulaire : **ATELIERS REUNIS CADDIE**
**13, rue de la Mairie**
**F-67300 Schiltigheim (FR)**

(72) Inventeur : **Le Marchand, Alain**
**1, Rue de Vendée**
**F-67116 Reichstett (FR)**
Inventeur : **Gillot, Raymond**
**Résidence Mansart 9, Avenue du Général de Gaulle**
**F-67800 Bischheim (FR)**

(74) Mandataire : **Tony-Durand, Serge**
**Cabinet Tony-Durand 77, rue Boissière**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative aux chariots destinés au transport de produits divers, et qui comportent deux parois latérales, constituées chacune par une grille formée par des fil métalliques entrecroisés, et qui sont fixées, à leur pied, sur deux côtés opposés d'une plateforme horizontale montée sur des roulettes. Par ailleurs les faces avant et arrière de ces chariots sont en général fermées par des panneaux amovibles. Cependant il peut également être prévu une paroi arrière fixe et une porte avant montée articulée sur le montant de l'une des parois latérales.

Les chariots de ce genre sont utilisés pour de nombreuses applications, par exemple pour le transport de marchandises en vue du ré-approvisionnement d'un magasin de vente. Dans un tel cas ces chariots sont habituellement pourvus d'un couvercle de fermeture à leur partie supérieure. Cependant comme ces chariots comportent également des parois latérales ainsi que des éléments de fermeture avant ou arrière emmanchés dans le socle, l'ensemble de la cage ainsi formée est soumis à de nombreux chocs en cours de transport dans des camions. Il est alors extrêmement fréquent que les parois latérales prennent un jeu supplémentaire à l'endroit de leur fixation sur la plateforme inférieure et que l'ensemble se déforme de façon importante. Il arrive également qu'en raison des manipulations subies en cours de transport, la cage ainsi déformée se déboite alors de la plateforme inférieure.

Les chariots de ce genre peuvent également être utilisés pour le transport et le stockage de produits de boucherie, par exemple de pièces de viande déjà découpées. Dans un tel cas ces chariots peuvent être pourvus d'étagères mobiles. Cependant là encore on rencontre les mêmes inconvénients que ceux exposés précédemment. Il en est également de même pour toutes les autres utilisations habituelles de tels chariots, notamment lorsque ceux-ci sont employés pour le transport de linge ou similaire entre un lieu d'utilisation et une blanchisserie.

C'est pourquoi la présente invention a pour but de réaliser un chariot du type en cause dont la structure est conçue de manière que celui-ci présente une très grande robustesse et puisse ainsi subir sans dommage les chocs qui sont inévitables au cours des opérations de transport. De plus la conception de ce chariot est telle qu'il est inutile de prévoir sur celui-ci un couvercle rapporté pour assurer sa fermeture à sa partie supérieure.

A cet effet le chariot selon l'invention est caractérisé en ce que les deux parois latérales de celui-ci affectent la forme générale d'un L renversé et les bords de leurs ailes supérieures horizontales sont jointifs et solidarisés entre eux, par exemple par boulonnage, les pieds des montants de ces deux parois latérales étant par ailleurs rigidement fixés dans des manchons verticaux prévus aux quatre coins de la plateforme inférieure du chariot.

Le brevet FR-A-2 189 304 décrit un chariot qui comporte deux montants verticaux opposés sur lesquels sont articulés des demi-cloisons qui s'emboitent chacune sur le montant opposé.

Ainsi les deux parois latérales forment, avec la plateforme inférieure, une cage parfaitement rigide qui est en mesure d'encaisser, sans dommage, des chocs répétés. Par ailleurs, cette cage est fermée à sa partie supérieure ce qui évite la nécessité de rapporter un couvercle sur le dessus. L'ensemble ainsi constitué avec la plateforme, réalise une construction monobloc qui évite tout jeu à la partie supérieure ou à la partie inférieure et évite tout risque de déformation de cette structure.

Selon une autre caractéristique du présent chariot, la fixation rigide du pied des montants des parois latérales peut être assurée par l'intermédiaire d'un embout rapporté à l'intérieur de ce pied et qui comporte un taraudage axial destiné à recevoir un boulon d'assemblage dont la tête s'appuie contre l'extrémité inférieure du manchon vertical correspondant porté par la plateforme inférieure du chariot.

Cependant d'autres particularités et avantages du présent chariot apparaitront au cours de la description suivante. Celle-ci est donnée en référence au dessin annexé à simple titre indicatif, et sur lequel :

La figure 1 est une vue en perspective d'un chariot selon l'invention.

La figure 2 est une vue partielle en plan de dessus de l'extrémité supérieure de ce chariot.

La figure 3 est une vue partielle en perspective de l'un des côtés de la plateforme inférieure.

La figure 4 est une vue partielle en coupe selon la ligne IV-IV de la figure 3.

Les figures 5 à 7 son des vues similaires à la figure 4, mais qui illustrent des variantes de réalisation.

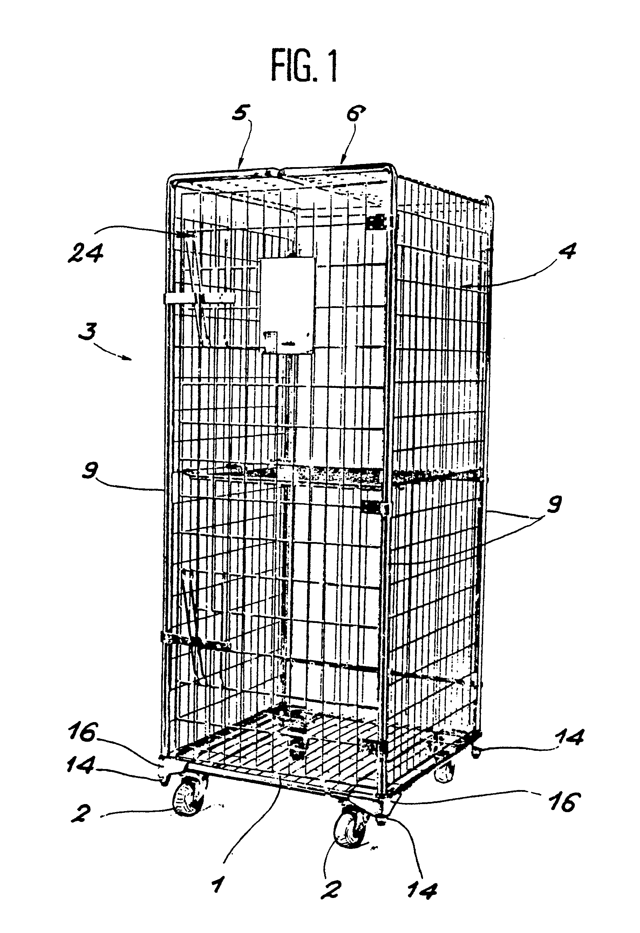

Le chariot représenté à la figure 1 comporte une plateforme inférieure 1 montée sur des roulettes 2. Au dessus de deux côtés opposés de cette plateforme, il est prévu deux parois latérales verticales 3 et 4. Conformément à la caractéristique principale de l'objet de l'invention, chacune de ces parois affecte la forme générale d'un L renversé. En conséquence la partie verticale de chacune de ces parois se prolonge, dans le haut, par une aile supérieure 5 ou 6 s'étendant à l'horizontale. Les deux ailes horizontales ainsi prévues s'étendent l'une vers l'autre et elles sont directement solidarisées l'une avec l'autre, par exemple par boulonnage.

Chacune des parois latérales 3 ou 4 est constituée par une grille formée par des fils métalliques entrecroisés et qui est entourée par un cadre en tube métallique. Un seul tube 7 ou 8, convenablement coudé, forme le cadre de chaque paroi latérale, les branches verticales de ce tube constituant les montants verticaux 9 de la paroi correspondante.

En conséquence la solidarisation des ailes supérieures horizontales 5 et 6 des parois latérales est assurée par boulonnage direct des côtés correspondants 10 et 11 des deux cadres 7 et 8, lesquels côtés sont jointifs. Ce boulonnage peut être assuré au moyen d'une série de boulons 12. Cependant la solidarisation directe des bords libres des ailes horizontales supérieures 5 ou 6 des deux parois latérales 3 et 4 pourrait être assurée par tous autres moyens appropriés.

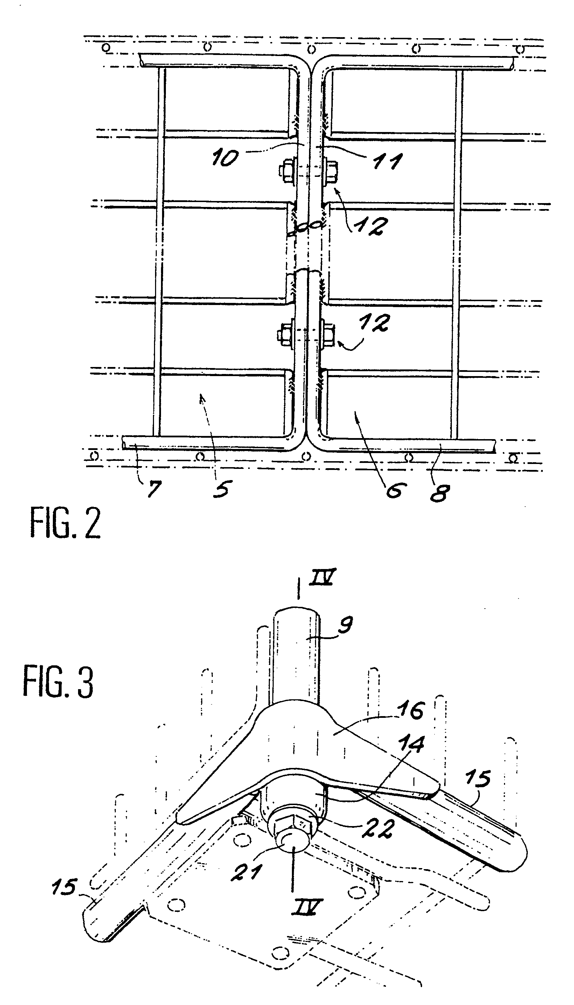

A son extrémité inférieure, le pied 13 de chaque montant 19 des deux parois latérales 3 et 4 est engagé à l'intérieur d'un manchon vertical 14 porté par la plateforme inférieure 1, à l'endroit de son coin correspondant. Chacun de ces manchons est solidarisé avec les côtés 15 de la plateforme inférieure par l'intermédiaire d'un gousset métallique 16 soudé sur ces divers éléments (voir figure 3).

De plus l'assemblage du pied 13 de chaque montant avec le manchon 14 correspondant est assuré par l'intermédiaire d'un embout métallique 17 rapporté à l'intérieur de l'extrémité du montant correspondant. Cet embout comporte une collerette inférieure 18 qui est solidarisée par soudure avec l'extrémité inférieure du montant respectif. Par ailleurs, l'embout 17 comporte un taraudage axial 19 à l'intérieur duquel est vissé un boulon 20 dont la tête 21 prend appui, par l'intermédiaire d'une rondelle 22, contre l'extrémité inférieure 23 du manchon 24, cette extrémité étant de préférence rétreinte.

Le boulon 20 ainsi prévu joue donc le même rôle que les vis de rappel prévues pour le montage des éléments constitutifs de certains meubles. De ce fait il existe une solidarisation étroite de l'extrémité inférieure de chaque montant 9 à l'intérieur du manchon 14 de réception correspondant, la section inférieure de ce manchon étant égale ou très légèrement supérieure à la section externe du pied 13 d'un montant. Etant donné que par ailleurs les extrémités supérieures des deux parois latérales 3 et 4 sont directement solidarisées l'une avec l'autre par l'intermédiaire de leurs ailes supérieures 5 et 6, on obtient de la sorte une cage parfaitement rigide constituée par la plateforme inférieure et les deux parois latérales du chariot. Dans ces conditions il ne peut pas y avoir de ballant des parois latérales pendant les opérations de transport et de manipulation du chariot. De plus les parois de ce chariot sont ainsi en mesure d'encaisser des chocs répétés sans que cela entraine une déformation de leurs parois ou un jeu à l'endroit des zones d'assemblage. En conséquence ce chariot est apte à être utilisé pour des applications impliquant de nombreuses manutentions et un transport avec d'autres chariot similaires, à l'intérieur d'un camion ou autre moyen de transport.

Du fait même de la rigidité de la cage formée par les parois latérales 3 et 4, les faces avant et arrière du présent chariot peuvent être toutes deux ouvertes de façon à recevoir, après remplissage, des panneaux amovibles de fermeture. Cependant il peut également être prévu à l'arrière une paroi verticale fixe et à l'avant un panneau amovible 24 de fermeture, comme cela est le cas dans l'exemple représenté à la figure 1. Bien entendu au lieu d'un tel panneau amovible il serait également possible de prévoir une porte montée articulée à demeure sur le montant avant de l'une des parois latérales.

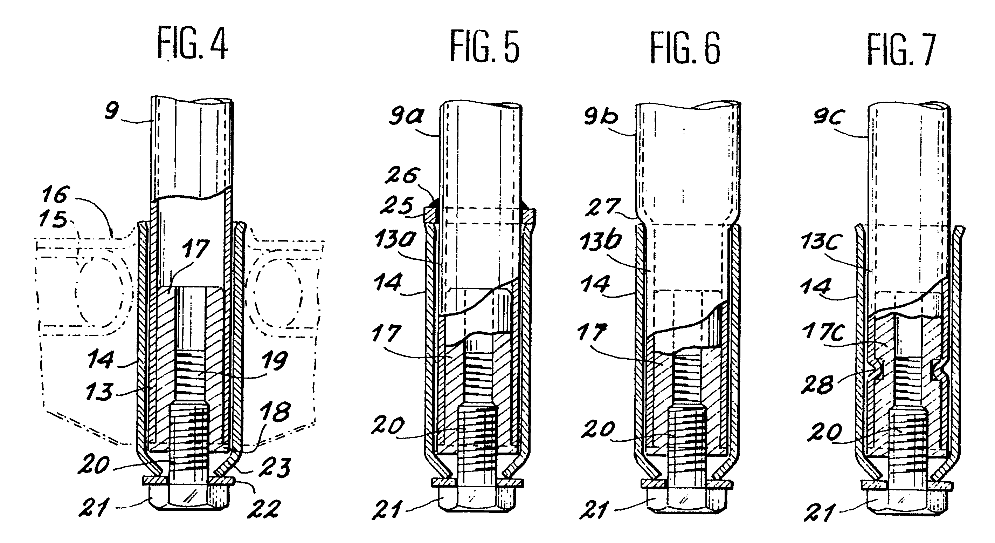

Les figures 5 à 7 représentent des variantes du mode de solidarisation du pied des montants verticaux des parois latérales avec les manchons de réception portés par la plateforme inférieure du chariot.

Dans le cas illustré à la figure 5, le pied 13a du montant correspondant 9a est fixé, comme précédemment, par l'intermédiaire d'un embout 17 à l'intérieur duquel est vissé un boulon de serrage 20. Cependant le pied du montant 9a est par ailleurs pourvu d'une bague rapportée 25 fixée sur lui par un cordon de soudure 26. Cette bague est disposée de façon à prendre appui sur l'extrémité supérieure du manchon de réception 14 porté par la plateforme inférieure du chariot.

Le cas illustré à la figure 6 se différencie du cas précédent uniquement par le fait que la bague supérieure d'appui 25 est en quelque sorte remplacée par un épaulement 27 ménagé au niveau voulu sur la partie supérieure du pied 13b du montant correspondant 9b.

Enfin le cas illustré à la figure 7 se différencie du mode de montage représenté à la figure 4 uniquement par le fait que l'embout d'assemblage correspondant 17c n'est plus fixé par soudure sur l'extrémité inférieure du montant respectif 9c. En effet dans le cas considéré, la solidarisation de ces deux éléments est assuré par un sertissage 28 du pied 13c de ce montant dans une gorge ménagée à cet effet autour de l'embout 17c.

Dans tous ces cas on obtient une solidarisation étroite de l'extrémité inférieure du montant considéré avec le manchon de réception de celui-ci. Cependant de nombreux autres solutions pourraient être adoptées pour obtenir une telle solidarisation.

Ainsi qu'il a déjà été indiqué, le chariot selon l'invention peut être utilisé pour de nombreuses applications et d'une façon générale pour le transport de marchandises et produits divers, notamment lorsque ce transport implique qu'un tel chariot soit placé, avec d'autres chariots similaires, à l'intérieur d'un camion ou d'un wagon de chemin de fer pour être ensuite déchargé et déplacé par roulement sur le sol.

## Revendications

1. Chariot destiné au transport de produits divers, et comportant deux parois latérales, constituées chacune par une grille formée par des fils métalliques entrecroisés, et qui sont fixées, à leur pied, sur deux côtés opposés d'une plateforme horizontale montée sur des roulettes, caractérisé en ce que les deux parois latérales (3, 4) affectent la forme générale d'un L renversé et les bords (10, 11) de leurs ailes supérieures horizontales (5, 6) sont jointifs et solidarisés entre eux, par exemple par boulonnage, les pieds (13, 13a, 13b, 13c) des montants (9, 9a, 9b, 9c) de ces deux parois latérales (3, 4) étant par ailleurs rigidement fixés dans des manchons verticaux (14) prévus aux quatre coins de la plateforme inférieure (1) du chariot.

2. Chariot selon la revendication 1, caractérisé en ce que la fixation rigide du pied (13, 13a, 13b, 13c) des montants (9, 9a, 9b, 9c) des parois latérales (3, 4) est assurée par l'intermédiaire d'un embout (17, 17c) rapporté à l'intérieur de ce pied et qui comporte un taraudage axial (19) destiné à recevoir un boulon d'assemblage (20) dont la tête (21) s'appuie contre l'extrémité inférieure du manchon vertical correspondant (14) porté par la plateforme inférieure (1) du chariot.

3. Chariot selon la revendication 2, caractérisé en ce que le pied (13, 13a, 13b, 13c) de chaque montant (9, 9a, 9b, 9c) des parois latérales (3, 4) porte une bague (25) prenant appui sur l'extrémité supérieure du manchon vertical correspondant (14) de la plateforme inférieure (1) du chariot.

4. Chariot selon la revendication 2, caractérisé en ce que le pied (13, 13a, 13b, 13c) de chaque montant (9, 9a, 9b, 9c) des parois latérales (3, 4) comporte un épaulement prenant appui sur l'extrémité supérieure du manchon vertical correspondant (14) de la plateforme inférieure (1) du chariot.

## Ansprüche

1. Einkaufswagen zum Transport verschiedener Produkte, mit zwei seitliche Wandungen, von denen jede ein Gitter aufweist, das durch sich kreuzende Metallstäbe gebildet ist, und die an ihrem unteren Teil auf zwei sich gegenüberliegenden Seiten einer horizontalen, auf Rädern befestigten, Plattform montiert sind, dadurch gekennzeichnet, daß die zwei seitlichen Wandungen (3, 4) im Wesentlichen die Form eines umgedrehten L aufweisen und die Ränder (10, 11) ihrer oberen horizontalen Flügel (5, 6) aneinanderstoßen und miteinander verbunden sind, z. B. durch Verschraubung, und daß die unteren Teile (13, 13a, 13b, 13c) der Stäbe (9, 9a, 9b, 9c) dieser zwei seitlichen Wandungen (3, 4) außerdem fest in vertikalen Hülsen (14) befestigt sind, die in den vier Ecken der plattform (1) des Einkaufswagens vorgesehen sind.

2. Einkaufswagen nach Anspruch 1, dadurch gekennzeichnet, daß die feste Anbringung des unteren Teils (13, 13a, 13b, 13c) der Stäbe (9, 9a, 9b, 9c) der seitlichen Wandungen (3, 4) vermittels eines Übergangsrohres (17, 17c) gesichert ist, das sich im Inneren dieses unteren Teils befindet und ein axiales Innengewinde (19) aufweist, das dazu bestimmt ist, eine Schraube (20) aufzunehmen, deren Kopf (21) sich gegen das untere Ende der vertikalen Hülse (14), die durch die Plattform (1) des Einkaufswagens getragen wird, anlegt.

3. Einkaufswagen nach Anspruch 2, dadurch gekennzeichnet, daß das untere Teil (13, 13a, 13b, 13c) jedes Stabes (9, 9a, 9b, 9c) der seitlichen Wandungen (3, 4) einen Ring (25) aufweist, der sich auf das obere Ende der entsprechenden vertikalen Hülse (14) der Plattform (1) des Einkaufswagens anlegt.

4. Einkaufswagen nach Anspruch 2, dadurch gekennzeichnet, daß das untere Teil (13, 13a, 13b, 13c) jedes Stabes (9, 9a, 9b, 9c) der seitlichen Wandungen (3, 4) einen Bund (27) aufweist, der auf dem oberen Ende der entsprechenden vertikalen Hülse (14) der Plattform (1) des Einkaufswagens aufliegt.

## Claims

1. A cart for the transport of various products, comprising two sidewalls, each one of which is constituted by a grid formed of metal wires crossing each other, the sidewalls being fixed, at their foot, onto two opposed sides of an horizontal platform mounted on small wheels, characterized in that the two sidewalls (3, 4) assume the general shape of an inverted L and the edges (10, 11) of their topmost horizontal wings (5, 6) are contiguous and are integrally bound together, for example by bolting, while the feet (13, 13a, 13b, 13c) of the uprights (9, 9a, 9b, 9c) of these two sidewalls (3, 4) are rigidly fixed inside vertical sleeves (14) provided on the four corners of the bottom platform (1) of the cart.

2. A cart according to Claim 1, characterized in that the rigid fastening of the foot (13, 13a, 13b, 13c) of the sidewalls (3, 4) is achieved through the intermediary of a joining piece (17, 17c) mounted inside this foot and which comprises an axial threaded bore (19) for receiving an assembling bolt (20), the head (21), of which rests against the bottom end of the corresponding vertical sleeve (14) carried by the bottom platform (1) of the cart.

3. A cart according to Claim 2, characterized in that the foot (13, 13a, 13b, 13c) of each upright (9, 9a, 9b, 9c) of the sidewalls (3, 4) carries a flange (25) resting against the top end of the corresponding vertical sleeve (14) of the bottom platform (1) of the cart.

4. A cart according to Claim 2, characterized in that the foot (13, 13a, 13b, 13c) of each upright (9, 9a, 9b, 9c) of the sidewalls (3, 4) is provided with a shoulder resting against the top end of the corresponding vertical sleeve (14) of the bottom platform (1) of the cart.

# FIG. 1

FIG. 2

FIG. 3

FIG.7  FIG.6  FIG.5  FIG.4